Europäisches Patentamt

European Patent Office

Office européen des brevets

(19)

(11) **EP 0 644 348 B1**

(12) **FASCICULE DE BREVET EUROPEEN**

(45) Date de publication et mention
de la délivrance du brevet:
**03.06.1998  Bulletin 1998/23**

(51) Int Cl.⁶: **F16D 65/00**, F16D 65/84,
F16D 55/40

(21) Numéro de dépôt: **94402062.7**

(22) Date de dépôt: **15.09.1994**

(54) **Frein d'avion comprenant une structure additionnelle destinée à améliorer la répartition de pression sur les disques du frein**

Flugzeugbremse mit ergänzender Struktur zur Verbesserung der Druckverteilung in den Bremsscheiben

Aircraft brake comprising a supplementary structure for improving the distribution of pressure applied to the brake discs

(84) Etats contractants désignés:
**CH DE GB IT LI**

(30) Priorité: **17.09.1993  FR 9311087**

(43) Date de publication de la demande:
**22.03.1995  Bulletin 1995/12**

(73) Titulaire: **AEROSPATIALE Société Nationale Industrielle**
**75781 Paris Cédex 16 (FR)**

(72) Inventeur: **Chareire, Jean-Louis**
**F-92300 Levallois Perret (FR)**

(74) Mandataire: **Poulin, Gérard et al**
**Société de Protection des Inventions**
**25, rue de Ponthieu**
**75008 Paris (FR)**

(56) Documents cités:
**DE-A- 2 043 363**          **FR-A- 2 457 413**
**US-A- 4 147 241**

## Description

L'invention concerne un frein d'avion comprenant une structure métallique flottante additionnelle, destinée à améliorer la répartition de pression sur les disques du frein.

Un frein d'avion classique comprend un empilement coaxial de disques de friction qui sont appelés rotors et stators.

Les rotors sont entraînés en rotation par la jante de la roue, par l'intermédiaire d'un ensemble de clavettes disposées sur l'intérieur de la jante et parallèlement à son axe. Ils peuvent donc coulisser par rapport à la jante.

Par un principe identique, les stators sont liés en rotation à l'essieu de la roue, tout en pouvant coulisser par rapport à cet essieu.

Les rotors et stators sont empilés alternativement et il suffit de comprimer axialement l'ensemble pour que le freinage ait lieu.

Cette compression est assurée par un ensemble de vérins hydrauliques axialement disposés sur une circonférence ayant un diamètre voisin du diamètre moyen des faces frottantes des disques. Cet ensemble de vérins est fixé sur le moyeu de la roue. A l'opposé de la pile de disques, par rapport aux vérins sont également fixés sur le moyeu de la roue un certain nombre de points d'appui centrés sur le diamètre moyen des faces frottantes des disques.

Pour commander le freinage, on n'utilise que la moitié du nombre des vérins, l'autre moitié étant une sécurité. Cependant, rien ne distingue les deux groupes de vérins, qui par ailleurs, sont disposés alternativement sur la circonférence.

Dans l'art antérieur, les vérins appuient directement sur la face du premier disque de l'empilement, qui est toujours un stator puisqu'il ne doit pas glisser par rapport aux vérins.

Cette configuration a pour but de gagner du poids. Pour cette même raison, le nombre des vérins disposés circonférentiellement est limité le plus possible. Pour un avion de ligne on trouve généralement de 10 à 14 vérins par exemple, soit 5 à 7 vérins actifs simultanément.

Compte tenu du diamètre des disques, la distance entre vérins actifs est donc d'environ 20 cm. Cette distance est élevée par rapport à l'épaisseur des disques, de sorte qu'il s'en suit une très grande variation de pression entre les disques en fonction de la distance aux vérins.

Lorsque les disques sont en carbone et, plus particulièrement, en carbone bon conducteur de la chaleur, donc peu durs, cet hétérogénéité de pression est responsable d'un accroissement de l'usure.

Par ailleurs, cette hétérogénéité de pression conduit à des hétérogénéités de températures et notamment à des zones très chaudes en prolongement de l'axe des vérins. Comme le coefficient de frottement du carbone et de beaucoup de matériaux de friction diminue fortement avec la température, il en résulte une diminution très sensible de la performance d'arrêt, particulièrement en cas de décollage avorté.

Le document FR-A-2 457 413 décrit, en référence à la figure 3, un frein d'avion dans lequel les pistons des vérins agissent sur le disque le plus proche par l'intermédiaire d'une plaque annulaire qui présente une cavité emboutie au droit de chaque piston, et par l'intermédiaire d'organes répartiteurs en forme de cloches, fixés à la plaque entre les vérins, du côté du disque.

Le but de l'invention est de diminuer très sensiblement l'hétérogénéité de pression en ne rajoutant qu'une masse relativement faible à l'ensemble d'un frein déjà réalisé.

Selon l'invention, il est proposé un frein d'avion, tel que défini par la revendication 1.

On réalise ainsi une structure métallique flottante légère mais très raide.

Cette solution peut s'appliquer sans autres changements à des freins existants et elle est originale en ce sens qu'elle possède la forme la plus performante en raideur et en masse compte tenu des espaces disponibles sur tous les freins actuels de part et d'autre de l'extrémité des vérins. La structure circulaire peut notamment être réalisée en tôle métallique ou en métal usiné dans la masse. Sa section tout le long de sa circonférence est celle d'un U à fond plat et présentant à droite et à gauche en haut du U un segment parallèle au fond. La somme de ces segments est sensiblement égale à la longueur du fond plat. Cependant, cette disposition de longueurs n'est pas impérative et des variantes peuvent être envisagées, notamment compte tenu des épaisseurs des diverses zones.

La hauteur du U est égale à la distance qui sépare la plaque de fixation des vérins de la surface du disque, lorsque la longueur des vérins est minimale.

Les flancs du U sont destinés à venir entourer avec un certain jeu de fonctionnement la base de tous les vérins.

L'extrémité des vérins n'est séparée du premier disque que par l'épaisseur de la structure, ce qui est négligeable pour la géométrie du frein.

A titre indicatif, une structure circulaire en acier selon l'invention, pesant environ 2 kg, améliore beaucoup la répartition de pression sur un frein car sa raideur équivaut à celle de deux des disques les plus épais pour un ensemble de 9 disques en carbone pesant 50 kg.

Lors de l'emploi de cette solution, il est préférable que les patins d'appui vissés à l'extrémité des vérins soient carrés ou rectangulaires ou, dans le meilleurs cas, en forme de secteur radial de couronne afin d'améliorer la transmission des efforts à la structure métallique.

Selon un perfectionnement à l'invention, la structure métallique flottante est munie, sur une face destinée à venir en appui contre le disque le plus proche des vérins, d'un nombre de cales identique au nombre total des vérins, et de moyens de repérage angulaire entre ladite structure et au moins un des vérins, de façon à ce que les cales se trouvent situées à une distance des vérins.

Ce perfectionnement consiste à fixer, par soudure ou brasage par exemple, des cales minces sous le fond du U, c'est-à-dire entre ce fond et le premier disque du frein. Ces cales sont disposées en quinconce par rapport aux vérins actifs et non actifs.

Si un frein possède un total de 10 vérins actifs et non actifs il y a donc 10 cales sous le fond du U et chacune d'elles est positionnée entre 2 vérins.

Dans ce cas, la structure en U est équipée d'un repère angulaire permettant de la positionner angulairement par rapport à au moins un vérin. On voit donc qu'avec ces cales, le nombre de points d'appui est égal à la somme des nombres de vérins actifs et non actifs, c'est-à-dire qu'il est le double de la situation de l'art antérieur. Le comportement du frein est inchangé si l'on passe des vérins actifs aux vérins inactifs.

L'intérêt de cette solution réside dans le fait que la flèche f des disques, responsable des hétérogénéités de pression est de la forme suivante :

$$f = K\,\frac{PxL^3}{ExI}$$

P = charge par vérin
L = distance entre vérins
E = module d'élasticité dans le plan
I = moment d'inertie
K est un coefficient qui dépend des encastrements aux appuis et du type de répartition de charge. Il est difficile à déterminer avec exactitude mais il reste valable comparativement.

On voit donc qu'avec deux fois plus de vérins la flèche tend à être huit fois plus faible. Ce facteur est un minimum car, compte tenu du diamètre des vérins, la réduction de portée libre est effectuée dans un facteur supérieur à deux.

L'avantage de ce perfectionnement par rapport à l'invention de base est donc, d'une part d'être beaucoup plus efficace à masse égale, d'autre part d'être plus indépendant de la raideur de la structure en U, ce qui permet d'alléger celle-ci.

Les flèches atteintes sous charge dans le cas de l'exemple chiffré précédent étant très faibles, on peut prévoir selon l'invention, des cales très minces. Leur épaisseur doit être comprise de préférence entre la flèche correspondant à la limite élastique du métal composant la structure en U et la flèche correspondant à l'effort maximal appliqué en pratique additionné à la flèche du premier disque.

Une autre possibilité selon l'invention consiste à observer que l'application en pratique de la charge maximale est extrêmement rare, donc sans conséquence sur l'usure. On peut donc dimensionner l'épaisseur des cales de telle sorte qu'elles assurent la répartition la plus régulière possible de la pression lors des freinages fréquents à pression moyenne et que, lorsque dans les cas exceptionnels la pression augmente, le jeu dans l'axe des pistons actifs s'annule entre le fond plat de la structure en U et le premier disque de l'empilement.

Ainsi, la structure en U est protégée contre la possibilité de subir des flèches importantes pouvant lui laisser une déformation permanente si sa température s'élève beaucoup à ce moment.

Les dimensions des cales selon l'invention, autres que leur épaisseur, peuvent varier assez fortement.

Toutefois, il est logique que leur largeur radialement mesurée par rapport aux disques soit identique à celle de la base du U.

Leur longueur dans la direction circonférentielle peut évoluer dans les conditions suivantes :

- si elle est courte, le principe de l'invention est parfaitement respecté d'un point de vue théorique car les points d'appui sur le premier disque sont bien équidistants ;
- si elle augmente, la zone d'appui tend à se rapprocher des vérins actifs à cause de la flèche prise par la structure en U.

Cependant, si la structure en U est relativement rigide, il peut y avoir intérêt à augmenter la longueur circonférentielle des cales pour cumuler les avantages des première et deuxième solutions selon l'invention.

La structure en U, selon l'invention a aussi pour avantage d'assurer la protection thermique des vérins, grâce au fait qu'il ne sont plus directement en contact des disques qui chauffent. Dans cet esprit, il est possible d'employer des cales d'appui en matériaux isolants et suffisamment réfractaires. Pour cela, les épaisseurs des cales étant très faibles (0,05 à 1 mm environ) on peut envisager diverses solutions telles que par exemple :

- dépôts de céramiques peu conductrices ou frittées à faible densité ;
- utilisation de métaux relativement peu conducteurs (acier inox, etc.) ;
- utilisation de métaux frittés poreux.

La structure métallique en U peut également être réalisée en acier faiblement conducteur.

Dans le cas où l'on n'emploie pas de cales, le contact thermique est bon entre le premier disque et la structure métallique en U. Cette structure peut alors, au contraire, servir de radiateur de chaleur pendant la ventilation des freins après un atterrissage. La forme de la structure en U lui donne en effet une grande surface d'échange avec l'air ambiant et peut donc servir à extraire plus vite la chaleur des disques qui, eux, sont très compacts. Dans le cas où on retient cet usage annexe de la structure en U il est possible, selon l'invention, d'augmenter encore son efficacité en y soudant des ailettes métalliques, de masse négligeable. On voit donc que l'on peut utiliser la structure en U comme isolant ou échangeur thermique. Cependant, dans tous les cas, cette structure protège thermiquement les vérins.

L'invention sera mieux comprise d'après les exemples suivants, faisant appel aux figures décrites ci-dessous :

- Figure 1 coupe schématique d'un frein à disques d'avion.
- Figure 2 : vue en coupe diamétrale illustrant une première forme de réalisation de la structure métallique selon l'invention.
- Figure 3 : vue axiale de la structure métallique de la figure 2, montrant l'appui d'un des vérins.
- Figure 4 : vue en coupe radiale de la structure métallique des figures 2 et 3, par l'axe d'un des vérins.
- Figure 5 : vue développée d'une pluralité de vérins, appuyant sur le fond d'une structure métallique représentée en coupe, illustrant une deuxième forme de réalisation, dans laquelle des cales d'appui et un système de positionnement angulaire par rapport aux vérins sont implantés sur la structure.
- Figure 6 : vue en coupe radiale, par l'axe d'un vérin, illustrant une variante de la structure métallique dans laquelle des ailettes de refroidissement en forme de couronnes concentriques sont implantées sur la structure.

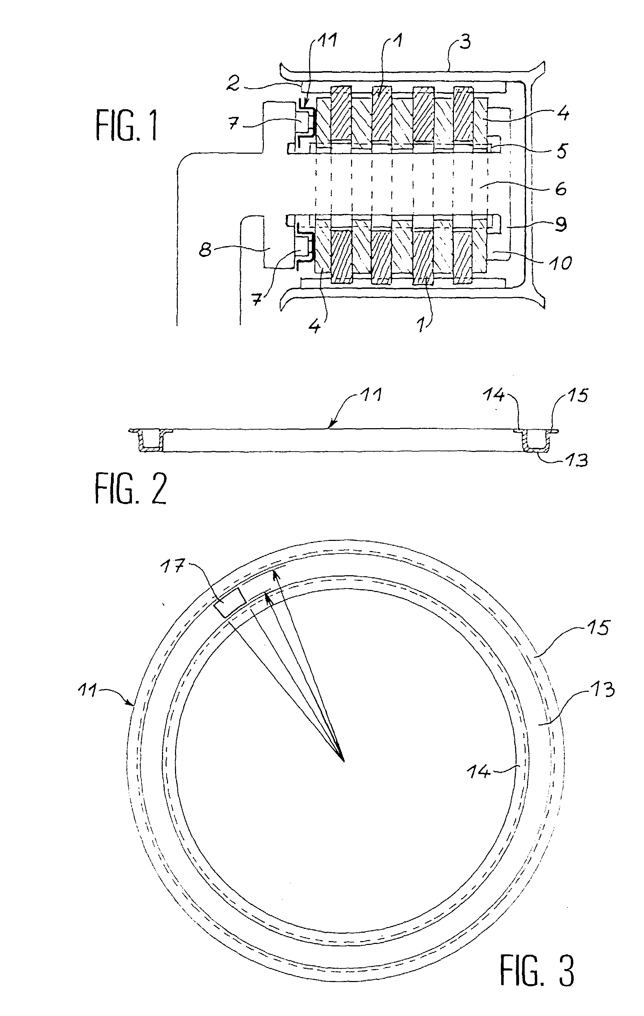

On distingue sur la figure 1 les disques rotors 1 d'un frein d'avion, entraînés en rotation par des clavettes 2 solidaires de la jante 3 de la roue. Le pneu n'est pas représenté. On voit aussi les disques stators 4 du frein, bloqués en rotation par des clavettes 5 solidaires du moyeu 6 de la roue. Les disques rotors 1 et stators 2 sont disposés alternativement pour former un empilement de disques.

Une pluralité de vérins 7 est fixée sur une couronne 8 solidaire du moyeu 6 en face d'une extrémité de l'empilement. De plus, les disques sont retenus axialement à l'autre extrémité de l'empilement par une couronne de retenue 9 comportant généralement une pluralité de points d'appui 10.

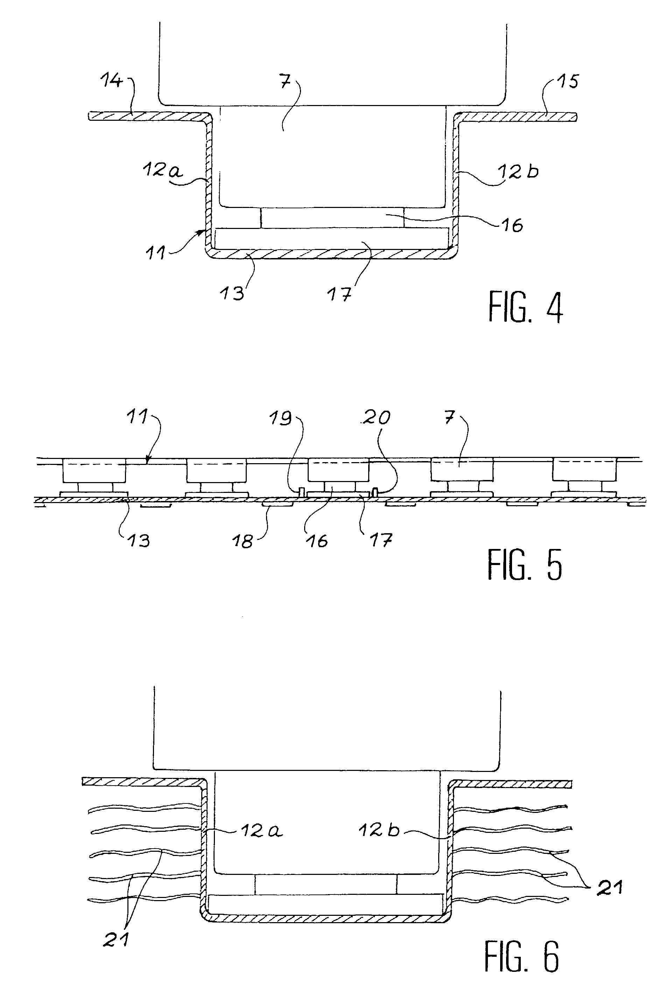

Conformément à l'invention, une structure métallique circulaire 11, représentée sur les figures 2 et 3, est interposée entre les pistons des vérins 7 et le disque stator 4 adjacent. Cette structure métallique circulaire 11 a en section la forme d'un U à fond plat 13. Les flancs 12a et 12b (figure 4) du U formé en section par la structure métallique 11 se prolongent vers l'extérieur du U, parallèlement au fond plat 13, sous la forme de segments 14 et 15 dont la somme des longueurs est sensiblement égale à celle présentée en section par le fond plat 13. Par ailleurs, chacun des segments 14 et 15 a sensiblement la même longueur.

On voit sur la figure 3 que les segments 14 et 15 sont en fait des couronnes concentriques intérieure 14 et extérieure 15.

On voit sur la figure 4 la position de la structure métallique 11 par rapport à chacun des vérins 7.

On constate que la largeur du U formé en section par la structure 11, c'est-à-dire la distance entre les flancs 12a et 12b sensiblement parallèles, est légèrement supérieure au diamètre du cylindre des vérins 7. Par conséquent, ces derniers sont placés entre les flancs 12a et 12b de telle sorte que la structure métallique 11 peut coulisser librement autour du cylindre des vérins 7.

Les extrémités des pistons 16 des vérins 7 sont équipés de patins d'appui 17 venant au contact du fond 13 de la structure 11. Ces patins d'appui 17 pénètrent librement dans ladite structure. Ils ont notamment pour rôle de centrer la structure 11 par rapport à l'axe du frein. Ils servent également à transmettre l'effort à la structure 11 de manière optimale et, pour cela, il est préférable de remplacer les habituels patins d'appui circulaires par des patins 17 ayant la forme de secteurs de couronnes tels que celui qui est représenté sur la figure 5;

La hauteur du U formé en section par la structure 11, c'est-à-dire la hauteur des flancs 12a et 12b, est égale à la distance qui sépare la couronne 8 portant les vérins 7 de la surface du premier disque stator 4, lorsque les vérins sont totalement rétractés.

La structure métallique 11 est réalisée dans un métal léger, réfractaire et à haut module d'élasticité, le meilleur étant de très loin le béryllium. D'autres métaux tels que l'acier peuvent aussi être utilisés.

La mise en forme de la structure 11 s'effectue sans difficulté par matriçage ou usinage ou assemblage d'éléments soudés ou rivetés par exemple. La forme représentée de la structure métallique 11 peut subir selon l'invention de nombreuses modifications notamment en ce qui concerne les épaisseurs locales, les angles et les proportions entre les longueurs des divers segments.

Sur la figure 5 apparaît la forme perfectionnée de réalisation de l'invention, dans laquelle des cales d'appui 18 sont situées entre le premier disque stator 4 du frein et la structure métallique 11 et fixées sur celle-ci.

On distingue une pluralité de vérins 7 situés sur une même circonférence qui est représentée en développé sur la figure 5, ainsi que la coupe de la structure 11 passant par l'axe de tous les vérins 7. On voit que les cales 18 sont situées à égale distance entre les vérins 7 adjacents.

Il est à noter que ce principe de cales 18 est inséparable d'une structure métallique additionnelle 11, mais que celle-ci peut éventuellement avoir, selon l'invention, une forme beaucoup moins bien optimisée mécaniquement que celle qui est l'objet de la première forme de réalisation.

On voit également sur la figure 5 deux taquets 19 et 20 servant à repérer angulairement lors du montage la structure métallique 11 par rapport à l'ensemble des vérins 7, de façon à ce que les cales 18 se trouvent bien situées à mi distance des vérins. Les taquets 19 et 20 sont formés sur la face intérieure du fond plat 13 de la structure 11 et séparés d'une distance légèrement supérieure à la longueur circonférentielle des patins 17, de façon à venir se placer de part et d'autre de l'un d'entre eux.

Il est à noter que les taquets 19 et 20 ne sont pas limitatifs de l'invention et de nombreux autres procédés peuvent être utilisés pour permettre le positionnement angulaire de la structure métallique 11.

Sur la figure 6, on a illustré une variante dans laquelle la structure métallique 11 est équipée d'un échangeur de chaleur constitué d'ailettes 21 qui sont des couronnes concentriques superposées et espacées fixées sur les flancs 12a et 12b par tout moyen assurant un bon contact thermique par exemple par soudage.

En variante, tout en occupant globalement le même emplacement que les ailettes en couronnes 21, sur la figure 6, les ailettes peuvent également se trouver dans des plans passant par l'axe de la structure 11, ou sous la forme de cylindres coaxiaux fixés sur les couronnes intérieure 14 et extérieure 15.

## Revendications

1. Frein d'avion, dans lequel une structure métallique flottante (11) est interposée entre l'ensemble des extrémités des vérins (7) du frein et le disque (4) le plus proche des vérins, cette structure étant destinée à améliorer la répartition de pression exercée sur ce disque et sur les suivants,ayant une forme générale circulaire et coaxiale avec les disques et présentant, sur toute sa circonférence, une section radiale un U (12) à fond plat dans lequel viennent s'enfoncer, avec un jeu suffisant, et s'appuyer les extrémités (17) de tous les vérins (7), les extrémités des flancs (12a,12b) du U (12) étant prolongées vers l'extérieur du U, de manière à former deux couronnes concentriques (14,15), de profil sensiblement parallèle au fond (13) du U (12).

2. Frein d'avion selon la revendication 1, dans lequel les extrémités des pistons (16) des vérins (7) sont équipés de patins d'appui (17) venant au contact du fond (13) de la structure (11).

3. Frein d'avion selon la revendication 2, dans lequel les patins d'appui (17) ont la forme de secteurs de couronnes.

4. Frein d'avion selon l'une quelconque des revendications précédentes, dans lequel la structure métallique flottante (11) est équipée d'un échangeur thermique consitué d'ailettes (21) fixées sur les flancs (12a,12b) du U (12) ou sur les couronnes concentriques (14,15).

5. Frein d'avion selon l'une quelconque des revendications précédentes, dans lequel la structure métallique flottante (11) est munie, sur une face (13) destinée à venir en appui contre le disque (4) le plus proche des vérins, d'un nombre de cales (18) identique au nombre total des vérins (7), et de moyens de repérage angulaire (19,20) entre ladite structure et au moins un des vérins (7), de façon à ce que les cales (18) se trouvent situées à mi-distance des vérins.

6. Frein d'avion selon la revendication 5, dans lequel l'épaisseur des cales (18) est dimensionnée pour qu'un contact direct s'établisse, dans l'axe des vérins actifs, entre la structure métallique flottante (11) et le disque (4) le plus proche des vérins, dès que la pression des vérins (7) atteint une valeur correspondant à un freinage important, donc rare, de manière à préserver la structure de tout effort très élevé.

7. Frein d'avion selon l'une quelconque des revendications 5 et 6, dans lequel les cales (18) sont composées d'un matériau relativement isolant et réfractaire, tel qu'une céramique peu conductrice ou frittée à faible densité, un métal fritté poreux, etc..

## Patentansprüche

1. Flugzeugbremse, bei der eine lose Metallstruktur (11) eingefügt ist zwischen die Gesamtheit der Enden der Zylinder (7) der Bremse und der am nächsten bei diesen Zylindern befindlichen Scheibe (4), wobei diese Struktur dazu bestimmt ist, die Druckverteilung auf diese Scheibe und auf die folgenden zu verbessern, eine generell kreisrunde und mit den Scheiben koaxiale Form hat und auf ihrem gesamten Umfang im Radialschnitt ein U mit flachem Boden aufweist, in dem mit einem ausreichenden Spiel die Enden (17) aller Zylinder (7) sitzen und sich abstützen und die Enden der Seitenwände (12a,12b) des U (12) an der Außenseite des U derart verlängert sind, daß sie zwei konzentrische Ringe (14,15) mit einem zum Boden (13) des U (12) im wesentlichen parallelen Profil bilden.

2. Flugzeugbremse nach Anspruch 1, bei der die Enden der Kolben (16) der Zylinder (7) mit Stützschuhen (17) ausgerüstet sind, die mit dem Boden (13) der Struktur (11) Kontakt haben.

3. Flugzeugbremse nach Anspruch 2, bei der die Stützschuhe (17) die Form von Ringsegmenten haben.

4. Flugzeugbremse nach einem der vorangehenden Ansprüche, bei der die lose Metallstruktur (11) mit einem Wärmetauscher ausgerüstet ist, gebildet durch Flügel (21), die an den Seitenwänden (12a, 12b) des U (12) oder an den konzentrischen Ringen (14,15) befestigt sind.

5. Flugzeugbremse nach einem der vorangehenden Ansprüche, bei der die lose Metallstruktur (11) auf einer Fläche (13), die zur Abstützung auf der am nächsten bei den Zylindern befindlichen Scheibe (4) dient, mit einer Anzahl Zwischenstücke (18) versehen ist, die der Gesamtzahl der Zylinder (7) entspricht, und mit Winkelfestlegungseinrichtungen (19,20) zwischen der genannten Struktur und wenigstens einem Zylinder (7), so daß sich die Zwischenstücke (18) auf halbem Abstand zwischen den Zylindern befinden.

6. Flugzeugbremse nach Anspruch 5, bei der die Dikke der Zwischenstücke (18) so dimensioniert ist, daß sich in der Achse der betätigten Zylinder ein direkter Kontakt einstellt zwischen der losen Metallstruktur (11) und der Scheibe (4), die den Zylindern am nächsten ist, sobald der Druck der Zylinder (7) einen Wert. erreicht, der einer starken, also seltenen Bremsung entspricht, um die Struktur vor jeder sehr hohen Beanspruchung zu schützen.

7. Flugzeugbremse nach einem der Ansprüche 5 und 6, bei der die Zwischenstücke (18) durch ein relativ isolierendes und hitzebeständiges bzw. feuerfestes Material gebildet werden, z.B. einer Keramik, wenig leitfähig oder gesintert mit geringer Dichte, einem porösen gesinterten Metall, etc..

**Claims**

1. Aircraft brake, in which a floating metal structure (11) is interposed between the ends of the brake jacks (7) and the disk (4) closest to the jacks, said structure being intended to improve the pressure distribution exerted on said disk and on the following disks, having a generally circular shape coaxial to the disks and having, over its entire circumference, a radial, U-shaped section (12) with a flat bottom, in which are introduced, with an adequate clearance, and support the ends (17) of all the jacks (7), the ends of the sides (12a, 12b) of the U (12) being extended towards the outside of the U, so as to form two concentric rings (14, 15) with a profile substantially parallel to the bottom (13) of the U (12).

2. Aircraft brake according to claim 1, wherein the ends of the piston (16) of the jacks (7) are equipped with pads (17) coming into contact with the bottom (13) of the structure (11).

3. Aircraft brake according to claim 2, wherein the pads (17) are shaped like ring sectors.

4. Aircraft brake according to any one of the preceding claims, wherein the floating metal structure (11) is equipped with a heat exchanger constituted by fins (21) fixed to the sides (12a, 12b) of the U (12) or to the concentric rings (14, 15).

5. Aircraft brake according to any one of the preceding claims, wherein the floating metal structure (11) is provided, on a face (13) which is to bear against the closest disk (4) of the jacks, with a number of shims (18) identical to the total number of jacks (7), and angular marking means (19, 20) between said structure and at least one of the jacks (7), so that the shims (18) are halfway between the jacks.

6. Aircraft brake according to claim 5, wherein the thickness of the shims (18) is dimensioned so that a direct contact is established, in the axis of the active jacks, between the floating metal structure (11) and the closest disk (4) of the jacks, as soon as the pressure of the jacks (7) reaches a value corresponding to a significant, i.e. rare braking, so as to protect the structure against very high forces.

7. Aircraft brake according to either of the claims 5 and 6, wherein the shims (18) are made from a relatively insulating and refractory material such as a slightly conductive ceramic or low density sintered material, porous sintered metal, etc.

FIG. 1

FIG. 2

FIG. 3

FIG. 4

FIG. 5

FIG. 6